# EUROPEAN PATENT SPECIFICATION

(11) **EP 0 353 214 B1**
(45) Date of publication and mention of the grant of the patent: **21.09.1994**
(21) Application number: 89850232.3
(22) Date of filing: 18.07.1989
(51) Int. Cl.: E21B 10/58

(54) **Drill bit with cemented carbide inserts**
Bohrmeissel mit Zementcarbideinsätzen
Trépan avec éléments rapportés au carbure cémenté

(30) Priority: 28.07.1988 SE 8802749
(43) Date of publication of application: 31.01.1990
(73) Proprietor: SANDVIK AKTIEBOLAG, 811 81 Sandviken (SE)
(72) Inventor: Lundell, Lars-Gunnar, S-811 52 Sandviken (SE)
(74) Representative: Taquist, Lennart

(56) References cited:
- AU-B- 423 189
- GB-A- 683 194
- GB-A- 2 180 280
- GB-B- 664 983
- US-A- 3 294 186

## Description

The present invention relates according to the precharacterizing part of claim 1 to a drill bit, preferably a bit of the percussion type, having a bit body of steel the front portion of which is provided with one or several slots in which inserts of tough cemented carbide are attached by brazing and in which the brazed joints between the insert and the lateral side surfaces of the slot are at least partially filled by support plates, said support plates having uniform thickness and substantially smaller thickness than the insert and said plates being made of cemented carbide or a metal alloy.

With commonly available drill bits equipped with hard metal inserts stresses occur between the hard metal insert and the steel material during brazing which under percussion impact are released and can lead to premature failure. The primary reason therefor is the difference in coefficients for linear expansion between the hard metal and the steel. It has been found that in rock formations that cause severe wear of the drill bit it is a desire to be able using cemented carbide grades of greater hardness which hitherto has been impossible due to the fact that they are too brittle due to the above related braze stresses. Usage of cemented carbide grades of higher hardness would also enable a reduction of the number of regrinding operations. Especially in long hole drilling operations it is desirable being able to complete the drilling of a hole as far as possible without having to interrupt the work in a certain situation for removing the drill for regrinding purposes.

In document GB-A-664,983 there is disclosed a drill bit for rock drilling that comprises a bit body provided with a slot in which a hard metal insert is secured together with a firmly adherent support plate of metal or alloy which melts at relatively high temperature. As suitable material for said support plates is proposed to use mild steel or copper, thus ensuring that a low temperature melting bonding medium is capable of making a strong bond between the support plate and the steel of the tool.

Document US-A-3,294,186 discloses a drill bit for rock drilling that comprises a bit body with a plurality of slots for receiving cemented carbide inserts. In order to get an improved joint between the insert and the bit body a shim plate of a nickel based or copper alloy is arranged in said slot and precoated with a suitable brasing alloy.

It is a purpose of the invention to solve the above related problem. In accordance with the present invention a new and improved drill bit primarily suitable for percussive drilling is provided according to claim 1, a drill bit which also is useful for rotary and crush drilling which is primarily characterized in that the support plates are made of cemented carbide or a metal alloy having a coefficient of linear expansion that for temperatures below 500°C is substantially smaller than that of the steel and the brazing alloy whilst being almost the same as that of the cemented carbide inserts. Due to such arrangement there is achieved a more rapid wear of the bevelled face, i.e. a fewer number of regrinding operations whilst simultaneously achieving improved life time in rock formations that cause severe wear. In accordance with a preferred embodiment of the invention the insert is in the shape of a chisel and exhibits at normal nose point angles 95-125° a width/length ratio B/L that amounts to B/L ≧ 0.18, preferably to B/L ≧ 0.25.

As mentioned the insert should consist of cemented carbide, i.e. a sintered material consisting of one or several carbides such as tungsten carbide, WC, and/or other hard substances, and a binder metal, usually cobalt. The composition of the cemented carbide shall preferably include 4-8% cobalt and the remainer WC with a grain size in the area 1-6 µm.

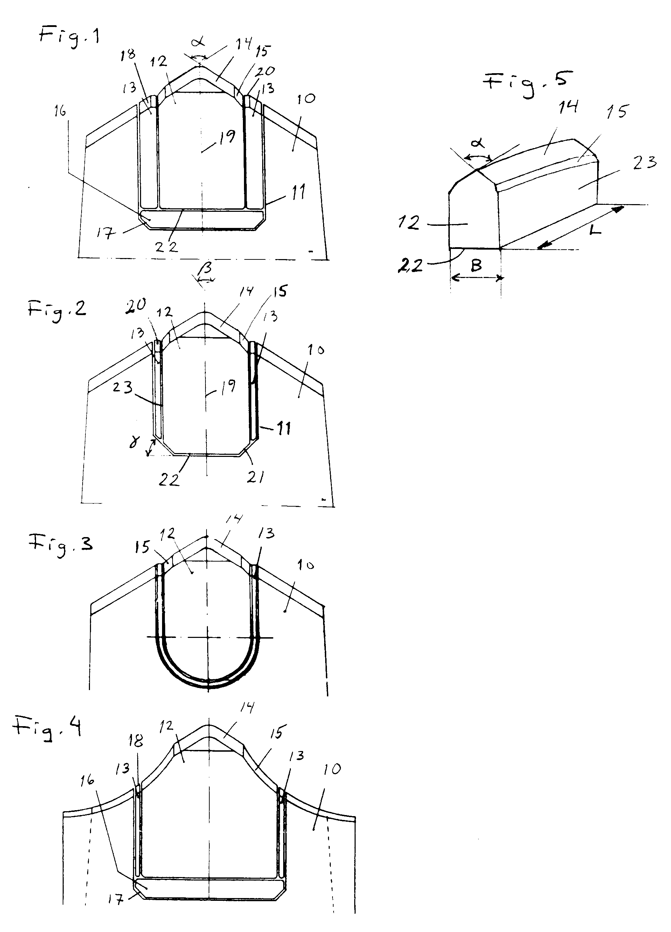

The invention will be more closely described in connection with the appended drawing showing schematic embodiments. Fig. 1 is an axial sectional view of a drill bit of the invention, Fig. 2 is a similar view of another embodiment of the invention. Fig. 3 is a similar view of an alternative embodiment of the invention. Fig. 4 is a similar view of yet another embodiment of the invention, and Fig. 5 is a schematic perspective view of a chisel type insert according to Fig. 1.

Referring to the drawings in Fig. 1 the drill bit comprises a bit body 10 of steel, the front working end of which is provided with a central slot 11 having a straight bottom in which a cemented carbide insert 12 with a straight base portion is located. The area between the insert 12 and the side surfaces of said slot 11 are filled with side plates of uniform thickness, said plates having a thickness of 1-4 mm. The side plates 13 consist of cemented carbide which is tougher than that of the insert 12, preferably comprising 8-25 weight percent cobalt and the remainder tungsten carbide, having a linear expansion coefficient that is considerably smaller than that of steel. The insert 12 is attached in the slot 11 by brazing where the braze metal preferably is a bronze or silver alloy. Also other braze alloys can be used. The insert 12 shown is of chisel type, i.e. its end portion 14 extending from the bit body 10 has a conical nose point angle, α, which typically amounts to a value in the area 95-125°. The surface portions 15 of the insert located adjacent the support plate 13 are provided with a nose point angle, β, which is less than α, preferably in the area 70-80°. The support plates 13 located between the insert 12 and the side surfaces of the slot 11 have uniform thickness whilst having a thickness that is essentially smaller than that of the insert 12. With the embodiment shown in Fig. 1 there is additionally provided a bottom plate 16, having same thickness as the side plates 13, whereby said bottom plate is provided as a support plate between the base portion of the insert and the bottom of the slot 11. At each of its end portions said bottom plate 16 is provided with a bevelled surface 17 and the transition zone between the bottom of said slot 11 and an adjacent side surface has the same formation. The upper portion of said support plates 13 is provided with a bevelled face 18 inclined at an angle α/2 relative to the centre axis 19 whereas the end surface 20 of said support plate 13 located most adjacent the insert is oriented perpendicularly in relation to the central axis 19.

With the embodiment shown in Fig. 2 the lower end surface 17 of the support plates 13 is bevelled at an angle, γ , that preferably amounts to 40-50° and is the same as the inclination angle of that surface 21 of the insert which provides a transition between the insert's bottom surface 22 and side surface 23. The upper end surface 20 of the side plates 13 is in this case oriented perpendicularly in relation to the central axis 19, i.e. planar and parallel with the bottom surface 22 of the insert. The bottom portion of the slot 11 has been given a formation corresponding with that of the surfaces 17, 21 and 22. In this embodiment the side plates 13 are made of a commercially available Fe-Ni-alloy type INVAR the coefficient of linear expansion of which in the area below 500°C is considerably less than that of the steel and the braze alloy. Alternatively other similar metal alloys can be used such as a Fe-Ni-Co-alloy.

With the embodiment shown in Fig. 3 the base portion of the insert has a semi-cylindrical form and the support plate 13 is provided at the side surface along the insert as well as at the bottom portion of the insert in the form of a continuous support plate having same semi-cylindrical form and uniform thickness.

With the embodiment shown in Fig. 4 the base portion of the insert 12 and the bottom supporting plate 16 have been given the same formation as with the embodiment shown in Fig. 1. In contrast with Fig. 1 the side plates 13 however have been given an essentially smaller thickness than that of the bottom supporting plate 16. The lower end surface of the side supporting plates 13 are planar and parallel with the bottom surface 22 of the insert and similarly intended to supportingly abut against the support plate 16 whereas the upper end surface 18 is bevelled. With the embodiment shown in Fig. 4 the base portions 15 of the insert located adjacent the side surfaces are smoothly rounded in concave shape whereby that part of the surface portion 15 that is located adjacent the side supporting plate 13 is inclined at an angle that substantially corresponds with that of the upper end surface 18 of the support plate 13. This enables a reduced risk of having the braze joint and the cobalt depleted zone of the insert subjected to percussive impact towards the rock. This form of the insert 12 also enables improved conditions for removal of drill cuttings. With the embodiment shown in Fig. 4 the bottom support plate 14 is made of tougher hard metal than compared with that of the insert 12, preferably of a material comprising 8-25 weight percent cobalt and the remainder tungsten carbide whereas the side support plate 13 is made of a metal alloy having a coefficient of linear expansion that is considerably lower than that of the steel and the braze material. The side plate 13 has suitably a thickness less than 1 mm whereas the thickness of the bottom plate 17 preferably amounts to 1-4 mm.

It is very important to select the insert material which preferably should be a cemented carbide with a cobalt content 4-8% and the remainder tungsten carbide and having a grain size of preferably 1-6 µm. The dimensioning of the insert 12 is also of vital importance. The general rules should be that the width, B, of the insert is not less than 0.18 times the length, L, of the insert at usual nose point angles, α, in the area 95-125°. The width/length ratio therefore ought to be B/L ≧ 0.18, preferably B/L ≧ 0.25. The primary purpose thereof is to ensure that the insert and specifically its cobalt depleted portion is not brought into direct contact with the rock during the drilling operation.

Furthermore, it is of vital importance to make a proper choice of material in the side plates 13 and, as the case may be, also in the bottom supporting plate 16. These support plates 13, 16 should consist of cemented carbide or a metal alloy the linear expansion coefficient of which, for temperatures below 500°C, is considerably less than that for steel and the braze metal. By making these support plates with uniform thickness their manufacture as also the brazing is simplified because inserts of uniform thickness might be brazed the normal way in slots under planar and parallel side surfaces. Also, this enables the maintenance of the width of the insert during its entire lifetime whereby a direct contact between the rock and the braze joint and appearance of a cobalt depleted zone can essentially be avoided. The thickness of the cemented carbide plates should be 1-4 mm and those carbide grades that are suitable for the support plates 13, 16 ought to have a cobalt content in the interval 8-25 weight percent and the remainder being tungsten carbide, WC. Support plates 13 made of a metal alloy such as INVAR should preferably have a thickness less than 1 mm.

### Example

A drill bit is made consisting of a bit body of steel with a diameter 33 mm equipped with a chisel type cemented carbide insert, said carbide comprising 6% cobalt and the remainder WC. The nose point angle was 110° and the width was 10 mm. The width of the insert is normally larger than 7 mm and preferably larger than 9.5 mm. If the drill bit is to be equipped with rotary symmetrical inserts (buttons) the same basic rule shall apply as related earlier, i.e. the insert shall be designed such that the braze material and the cobalt depleted zone in the insert are not subjected for direct percussive impacts from the rock.

## Claims

1. Drill bit comprising a bit body of steel, the front working portion (10) of which is provided with one or several slots (11) in which inserts (12) of tough cemented carbide are attached by brazing whereby the brazed joints between the insert and the side surfaces of said slot (11) are at least partially filled by support plates (13), whereby the support plates (13) have uniform thickness and substantially smaller thickness than the insert (12) and said support plates being made of cemented carbide or a metal alloy characterized in that said support plates (13) having a coefficient of linear expansion which for temperatures below 500°C is substantially smaller than that for steel and the braze metal whilst being approximately the same as that of said cemented carbide inserts (12).

2. Drill bit as defined in claim 1, **characterized** in that the insert is chisel shaped having a nose point angle in the range 95-125°.

3. Drill bit as defined in claim 1 or 2, **characterized** in that the width/length ratio, B/L, of said insert amounts to B/L ≧ 0.18.

4. Drill bit as defined in any of the claims 1-3, **characterized** in that the width/length ratio amounts to B/L ≧ 0.25.

5. Drill bit as defined in any of the claims 1-4, **characterized** in that the base portion of the insert is semi-cylindrical and that the support plate (13) is provided along the side surfaces and along the bottom portion of said insert in the form of a continuous partly semi-cylindrically shaped plate with uniform thickness.

6. Drill bit as defined in any of the claims 1-4, **characterized** in that the base portions of the support plates (13) and the insert (12) is at the transition between their bottom and side surfaces provided as inclined bevelled surfaces (17) and (21) respectively and that the bottom surface of said slot (11) has a corresponding formation.

7. Drill bit as defined in any of the claims 1-4, **characterized** in that said support plates comprise side support plates (13) arranged on opposite sides of the insert (12) and a bottom supporting plate (16) whereby said bottom plate (16) is provided with bevelled faces (17) corresponding with those in said slot (11) whereas the bottom surfaces of the side support plates (13) and said insert (12) are planar and parallel in a direction perpendicular from the central axis (19) and arranged in supporting abutment against said bottom support plate (16).

8. Drill bit as defined in claim 7, **characterized** in that the side support plates (13) are made of a metal alloy preferably Fe-Ni- or Fe-Ni-Co-type, that said insert is made of cemented carbide with 4-8 weight percent Co and the remainder WC, and that the bottom plate (16) consists of a cemented carbide with higher cobalt content than that of the insert preferably 8-25 weight percent Co, the remainder WC.

9. Drill bit as defined in claim 8, **characterized** in that the thickness of the side plates (13) is less than 1 mm and that the thickness of the bottom plate (16) is 1-4 mm.

10. Drill bit as defined in any of the claims 1-9, **characterized** in that the central nose portion (14) of the insert (12) has a nose point angle (α) that is larger than the nose point angle (β) of the insert's surface portion (15) located adjacent the side support plates (13).

11. Drill bit as defined in any of the claims 1-10, **characterized** in that the end portion (18) of the support plates (13) located adjacent the insert is planar and parallel with the bottom surface (22) of the insert.

12. Drill bit as defined in any of the claims 1-11, **characterized** in that the surface portion (15) of the insert (12) located adjacent the side support plates (13) has a smoothly curved concave shape whereby that part of said surface portion (15) located adjacent said side support plate (13) is provided at an inclination angle that exactly or approximately corresponds with the similarly inclined bevelled surface (18) of said support plate.

## Patentansprüche

1. Bohrmeißel mit einem Meißelkorpus aus Stahl, wobei der vordere Arbeitsbereich (10) des Meißelkörpers mit einem oder mehreren Schlitzen (11) versehen ist, in welchen Einsätze (12) aus hartem Sintercarbid mittels Hartlöten angebracht sind, wobei die Lötverbindungen zwischen dem Einsatz und den Seitenflächen des Schlitzes (11) zumindest teilweise durch Halteplatten (13) ausgefüllt sind, die Halteplatten (13) eine gleichmäßige Dicke und eine wesentlich geringere Dicke als der Einsatz haben und die Halteplatten aus Sintercarbid oder einer Metallegierung hergestellt sind, dadurch gekennzeichnet, daß die Haiteplatten (13) einen linearen Expansionskoeffizienten haben, der für Temperaturen unterhalb von 500°C wesentlich kleiner ist als derjenige von Stahl und dem Hartlotmetall, während er in etwa derselbe ist wie derjenige der Einsätze (12) aus Sintercarbid.

2. Bohrmeißel nach Anspruch 1, dadurch gekennzeichnet, daß der Einsatz Meißel bzw. Beitelform hat mit einem Spitzenwinkel im Bereich von 95° bis 125°.

3. Bohrmeißel nach Anspruch 1 oder 2, dadurch gekennzeichnet, daß das Verhältnis zu Breite zu Länge, B/L, der Einsätze einen Wert von B/L ≧ 0,18 hat.

4. Bohrmeißel nach einem der Ansprüche 1 bis 3, dadurch gekennzeichnet, daß das Verhältnis von Breite zu Länge Werte von B/L ≧ 0,25 hat.

5. Bohrmeißel nach einem der Ansprüche 1 bis 4, dadurch gekennzeichnet, daß der Grundabschnitt des Einsatzes halbzylindrisch ist und daß die Halteplatte (13) entlang der Seitenflächen und entlang des Bodenabschnittes des Einsatzes in Form einer kontinuierlichen, teilweise halbzylindrisch geformten Platte mit gleichförmiger Dicke vorgesehen ist.

6. Bohrmeißel nach einem der Ansprüche 1 bis 4, dadurch gekennzeichnet, daß die Grundabschnitte der Halteplatten (13) und der Einsatz (12) am Übergang zwischen ihrem Boden und den Seitenflächen als geneigte, abgeschrägte Flächen (17) bzw. (21) vorgesehen sind und daß die Bodenfläche des Schlitzes (11) eine entsprechende Ausformung hat.

7. Bohrmeißel nach einem der Ansprüche 1 bis 4, dadurch gekennzeichnet, daß die Halteplatten seitliche Stütz- bzw. Halteplatten (13) aufweist, die auf gegenüberliegenden Seiten des Einsatzes (12) angeordnet sind, sowie eine Bodenstützplatte (16), wobei die Bodenplatte (16) mit abgeschrägten Flächen (17) versehen ist, welche jenen in dem Schlitz (11) entsprechen, während die Bodenflächen der seitlichen Halteplatten (13) und der Einsatz (12) eben und parallel in einer Richtung senkrecht von der zentralen Achse (19) verlaufen und in Stützeingriff an der Bodenstützplatte (16) angeordnet sind.

8. Bohrmeißel nach Anspruch 7, dadurch gekennzeichnet, daß die seitlichen Halteplatten (13) aus einer Metallegierung hergestellt sind, vorzugsweise vom Fe-Ni- oder vom Fe-Ni-Co-Typ, daß der Einsatz aus Sintercarbid hergestellt ist mit 4 bis 8 Gew.-% Co und im übrigen aus WC (Wolframcarbid), und daß die Bodenplatte (16) aus einem Sintercarbid mit einem höheren Kobaltgehalt als demjenigen des Einsatzes besteht, vorzugsweise mit 8 bis 25 Gew.-% Co, und im übrigen WC enthält.

9. Bohrmeißel nach Anspruch 8, dadurch gekennzeichnet, daß die Dicke der Seitenplatten (13) weniger als 1 mm beträgt und daß die Dicke der Bodenplatte (16) zwischen 1 und 4 mm liegt.

10. Bohrmeißel nach einem der Ansprüche 1 bis 9, dadurch gekennzeichnet, daß der zentrale Spitzenabschnitt (14) des Einsatzes (12) einen Spitzenwinkel (α) hat, der größer ist als der Spitzenwinkel (β) des Oberflächenabschnittes (15) des Einsatzes, welcher an die seitlichen Halteplatten (13) angrenzend angeordnet ist.

11. Bohrmeißel nach einem der Ansprüche 1 bis 10, dadurch gekennzeichnet, daß der Endabschnitt (18) der Halteplatten (13), der an den Einsatz angrenzend angeordnet ist, eben und parallel zu der Bodenfläche (22) des Einsatzes ist.

12. Bohrmeißel nach einem der Ansprüche 1 bis 11, dadurch gekennzeichnet, daß der Oberflächenabschnitt (15) des Einsatzes, welcher neben den seitlichen Halteplatten (13) angeordnet ist, eine sanft gekrümmte, konkave Form hat, wobei derjenige Teil dieses Oberflächenabschnittes (15), welcher neben bzw. an der seitlichen Halteplatte (13) angeordnet ist, unter einem Neigungswinkel vorgesehen ist, der genau oder näherungsweise der in ähnlicher Weise geneigten, abgeschrägten Oberfläche (18) der Halteplatte entspricht.

## Revendications

1. Trépan comprenant un corps de trépan en acier dans la partie avant de travail (10) duquel sont ménagées une ou plusieurs fentes (11) dans lesquelles des plaquettes (12) en carbure cémenté dur sont attachées par brasage, les assemblages brasés entre la plaquette et les surfaces latérales de ladite fente (11) étant au moins en partie remplis de plaques de support (13), les plaques de support (13) étant d'une épaisseur uniforme et d'une épaisseur sensiblement plus petite que la plaquette (12) et lesdites plaques de support étant en carbure cémenté ou en un alliage métallique, caractérisé en ce que le coefficient de dilatation linéaire desdites plaquettes de support est sensiblement plus petit, pour des températures inférieures à 500°C, que celui de l'acier et du métal de brasage tout en étant approximativement le même que celui desdites plaquettes (12) en carbure cémenté.

2. Trépan selon la revendication 1, caractérisé en ce que la plaquette est configurée en ciseau dont l'angle de bec est dans la plage de 95 à 125°.

3. Trépan selon la revendication 1 ou 2,
caractérisé en ce que le rapport B/L entre la largeur et la longueur de ladite plaquette se monte à B/L ≧ 0,18.

4. Trépan selon l'une quelconque des revendications 1 à 3, caractérisé en ce que le rapport entre la largeur et la longueur se monte à B/L≧ 0,25.

5. Trépan selon l'une quelconque des revendications 1 à 4, caractérisé en ce que la partie de base de la plaquette est semi-cylindrique et que la plaque de support (13) est réalisée, le long des surfaces latérales et le long de la partie inférieure de ladite plaquette, sous la forme d'une plaque continue de configuration en partie semi-cylindrique d'une épaisseur uniforme.

6. Trépan selon l'une quelconque des revendications 1 à 4,
caractérisé en ce que les parties de base des plaques de support (13) et de la plaquette (12) sont réalisées, à la transition entre leurs surfaces inférieures et leurs surfaces latérales, en forme de surfaces biseautées inclinées (17) et (21), respectivement, et en ce que la surface inférieure de ladite fente (11) est formée de façon correspondante.

7. Trépan selon l'une quelconque des revendications 1 à 4,
caractérisé en ce que lesdites plaques de support comprennent lesdites plaques latérales de support (13) agencées sur des cotés opposés de la plaquette (12) et une plaque inférieure de support (16), ladite plaque inférieure de support (16) étant pourvue de faces biseautées (17) correspondant avec celles de ladite fente (11) tandis que les surfaces inférieures desdites plaques latérales de support (13) et de ladite plaquette (12) sont planes et parallèles dans une direction perpendiculaire à l'axe central (19) et sont agencées en butée de support contre ladite plaque inférieure de support (16).

8. Trépan selon la revendication 7,
caractérisé en ce que les plaques latérales de support (13) sont en un alliage métallique, de préférence du type Fe-Ni ou Fe-Ni-Co, en ce que ladite plaquette est en carbure cémenté à 4 à 8 pour cent en poids de Co, le reste étant du WC, et en ce que la plaque inférieure (16) consiste en un carbure cémenté à teneur en cobalt plus élevée que celle de la plaquette, de préférence 8 à 25 pour cent en poids de Co, le reste étant du WC.

9. Trépan selon la revendication 8,
caractérisé en ce que l'épaisseur des plaques latérales (13) est inférieure à 1 mm et l'épaisseur de la plaque inférieure (16) est de 1 à 4 mm.

10. Trépan selon l'une quelconque des revendications 1 à 9,
caractérisé en ce que l'angle de bec (α) de la partie centrale (14) de bec de la plaquette (12) est supérieur à l'angle de bec (β) de la partie de surface (15) de la plaquette située près des plaques latérales de support (13).

11. Trépan selon l'une quelconque des revendications 1 à 10, caractérisé en ce que la partie d'extrémité (18) des plaques de support (13) située près de la plaquette est plane et parallèle à la surface inférieure (22) de la plaquette.

12. Trépan selon l'une quelconque des revendications 1 à 11, caractérisé en ce que la configuration de la partie de surface (15) de la plaquette (12) située près des plaques latérales de support (13) est incurvée de façon uniforme concave, la partie de la fraction de surface (15) qui est située près de ladite plaque de support (13) présentant un angle d'inclinaison qui correspond exactement ou approximativement avec la surface biseautée inclinée de façon semblable (18) de ladite plaque de support.
